# EUROPEAN PATENT SPECIFICATION

(11) **EP 3 896 304 B1**
(45) Date of publication and mention of the grant of the patent: **27.03.2024**
(21) Application number: 21168596.1
(22) Date of filing: 15.04.2021
(51) Int. Cl.: F16D 3/26, F16D 3/36, F16D 3/44, F16D 3/46, B62D 1/20, B62D 5/04

(54) **STEERING MECHANISM OF ALL-TERRAIN VEHICLE AND ALL-TERRAIN VEHICLE**
LENKMECHANISMUS FÜR EIN GELÄNDEFAHRZEUG UND GELÄNDEFAHRZEUG
MÉCANISME DE DIRECTION DE VÉHICULE TOUT TERRAIN ET VÉHICULE TOUT TERRAIN

(30) Priority: 15.04.2020 CN 202020556105 U
(43) Date of publication of application: 20.10.2021
(73) Proprietor: Segway Technology Co., Ltd., Jiangsu 213000 (CN)
(72) Inventor: LI, Xiang, Jiangsu, 213000 (CN)
(74) Representative: Stöckeler, Ferdinand

(56) References cited:
- EP-A2- 0 048 564
- CN-A- 110 239 611
- FR-A1- 2 793 287
- US-A- 4 921 470
- US-A1- 2003 027 641

## Description

### FIELD

The present disclosure relates to the field of vehicle manufacturing, and more particularly, to a steering mechanism of an all-terrain vehicle and an all-terrain vehicle.

### BACKGROUND

In the related art, a steering shaft of an all-terrain vehicle is generally directly and rigidly coupled to a power steering system, but due to certain errors in manufacturing and assembling processes, there is a situation where the steering shaft is not coaxial with the power steering system, such that a steering wheel of the all-terrain vehicle will become heavy or difficult to turn in a long-term frequent steering process, which in turn causes parts for fixing the steering shaft to be easily worn, and ultimately affects driving safety.

US20030027641A1 relates to a universal joint and coupling assembly is disclosed which is utilized to connect and transfer power or movement between at least two movable or moving members which respectively have different positional planes, orientations or movement axes. The invention is provided with a novel channeled spherical or ball-like guide connection member for greater angle positioning along less wearable surfacing. This guide connection member functions both to secure support attachment components which are a part of or connect to one or more moving members, and to securely allow movement through secure channeling and tracking of each of the support attachment components onto the guide connection member.

CN110239611A discloses an all-terrain vehicle and a steering system thereof. The steering system includes a steering wheel, a steering power assisting device, a steering cross shaft assembly, a steering column pipe and a steering gear box. The steering power assisting device is provided with an upper connecting shaft and a first connecting shaft; the steering cross shaft assembly includes a rotating shaft and a driven shaft, the upper end of the rotating shaft is connected with the steering wheel, the upper end of the driven shaft is connected with the lower end of the rotating shaft through an upper cross shaft joint, a lower cross shaft joint is arranged at the lower end of the driven shaft, and the lower cross shaft joint is connected with the upper connecting shaft; and the steering column pipe rotatably sleeves the rotating shaft and is rotatably connected to a vehicle frame, and a center point of the upper cross shaft joint is located on a rotation axis of the steering column pipe relative to the vehicle frame.

US4921470A relates to a universal joint including an intermediate joint member having a spherical portion as assembled and four ridges formed on the outer surface of the spherical portion and defining four guide furrows therebetween, and two shaft each having one end bifurcating into two arms. The two arms of one of the shafts are fitted in two of the guide furrows positioned symmetrically, and the two arms of the other shaft are fitted in the other two guide furrows positioned symmetrically. The entire j oint member includes two divided half segments arranged in combination axially of the member. Alternatively, the spherical portion includes two divided half segments arranged in combination axially thereof, one of the spherical half segments being integrally formed with two of the ridges positioned symmetrically and extending to over the outer surface of the other spherical half segment, the other spherical half segment being integrally formed with the other two ridges positioned symmetrically and extending to over the outer surface of said one spherical half segment.

### SUMMARY

In view of the above, a main objective of embodiments of the present disclosure is to provide a steering mechanism of an all-terrain vehicle and an all-terrain vehicle, to solve the technical problem of the all-terrain vehicle in the related art that parts for fixing the steering shaft are prone to abrasion in the long-term frequent steering process.

To achieve the above objective, technical solutions of the embodiments of the present disclosure are implemented as follows.

An embodiment of the present disclosure provides a steering mechanism of an all-terrain vehicle, as defined in claim 1.

Further, the adjusting mechanism further includes a dust cover covering the ball joint, the first ball groove and the second ball groove.

Further, the power steering system is splined to the second connecting shaft.

Further, the power steering system includes a connecting rod having an external spline, the second connecting shaft is provided with a shaft hole having an internal spline, and the internal spline is arranged on an inner wall of the shaft hole; and the second connecting shaft is fitted over the connecting rod, and the external spline is fitted with the internal spline.

Further, the connecting rod has a side wall provided with a first through hole, and the second connecting shaft has a side wall provided with a second through hole; in a fitted-over state, the first through hole is in communication with the second through hole, and a fastener passes through the first through hole and the second through hole to fasten the second connecting shaft to the connecting rod.

Further, the power steering system is fastened to the second connecting shaft.

Further, the first connecting shaft is splined and/or fastened to the steering shaft.

Optionally, two end portions of the first ball yoke are configured to slide in the first groove, and two end portions of the second ball yoke are configured to slide in the second groove.

Optionally, the power steering system comprises a connecting rod having an internal spline, the second connecting shaft is provided with an external spline, and the connecting rod is fitted over the second connecting shaft.

Optionally, the steering mechanism further comprises a steering rocker arm and two steering links; and the steering rocker arm has a first end rotatably coupled to the power steering system and a second end rotatably coupled to the two steering links.

Optionally, the steering mechanism includes a steering handle assembly coupled to the steering shaft.

Optionally, the power steering system is an electric power steering system.

Another embodiment of the present disclosure further provides an all-terrain vehicle of a straddle type. The all-terrain vehicle includes a frame and the above steering mechanism, and the power steering system is fixed to the frame.

The embodiments of the present disclosure provide the steering mechanism of an all-terrain vehicle and the all-terrain vehicle; and by providing the adjusting mechanism having the first connecting shaft and the second connecting shaft as well as the ball joint between the steering shaft and the power steering system, a heavy steering condition of the all-terrain vehicle in the long-term frequent steering process may be avoided, thereby preventing the abrasion of the parts configured to fix the steering shaft, then greatly improving controllability of an operator in a driving process, and guaranteeing driving safety.

### BRIEF DESCRIPTION OF THE DRAWINGS

Fig. 1 is a schematic structural diagram of a steering mechanism according to an embodiment of the present disclosure;
Fig. 2 is a schematic structural diagram of the steering mechanism shown in Fig. 1, from another angle of view;
Fig. 3 is a partial enlarged view at A in Fig. 2;
Fig. 4 is a schematic structural diagram of an adjusting mechanism shown in Fig. 1;
Fig. 5 is a view of the adjusting mechanism shown in Fig. 4 in direction B, with a dust cover omitted;
Fig. 6 is a sectional view of the adjusting mechanism shown in Fig. 4 along a C-C line;
Fig. 7 is an exploded view of Fig. 5; and
Fig. 8 is a view in direction D of Fig. 7.

Reference numerals:
steering shaft 10; power steering system 20; connecting rod 21; adjusting mechanism 30; first connecting shaft 31; first body 311; first ball yoke 312; first ball groove 312a; second connecting shaft 32; second body 321; second through hole 321a; second ball yoke 322; second ball groove 322a; ball joint 33; first groove 33a; second groove 33b; dust cover 34; first pin 35; second pin 36; steering handle assembly 40; rocker arm 50; steering link 60.

### DETAILED DESCRIPTION

It should be noted that embodiments and technical features in the embodiments of the present disclosure may be combined with each other without conflict, and detailed description shall be understood as explanation on principles of the present disclosure rather than construed as limitation of the present disclosure.

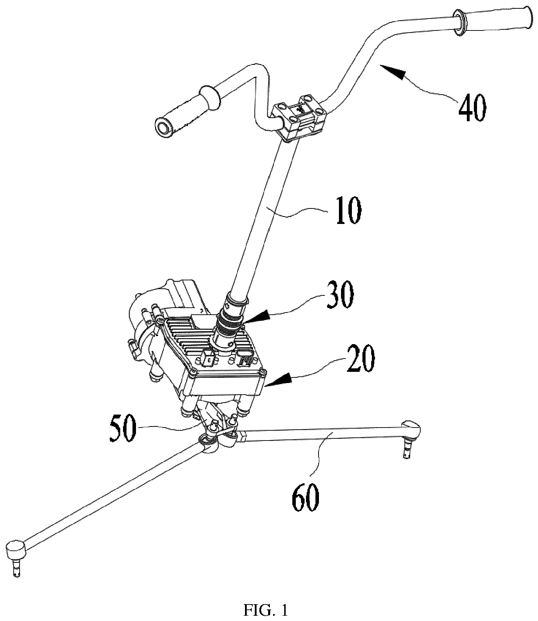

An embodiment of the present disclosure provides a steering mechanism of an all-terrain vehicle. Referring to Figs. 1 to 6, the steering mechanism includes a steering shaft 10, a power steering system 20 and an adjusting mechanism 30. The adjusting mechanism 30 includes a ball joint 33, a first connecting shaft 31 and a second connecting shaft 32. The first connecting shaft 31 has a first end provided with a first ball groove 312a, and the second connecting shaft 32 has a first end provided with a second ball groove 322a. The first ball groove 312a and the second ball groove 322a each accommodate a partial structure of the ball joint 33, such that the first connecting shaft 31 and the second connecting shaft 32 are rotatably coupled by the ball joint 33. A second end of the first connecting shaft 31 away from the first ball groove 312a is coupled to the steering shaft 10, and a second end of the second connecting shaft 32 away from the second ball groove 322a is coupled to the power steering system 20.

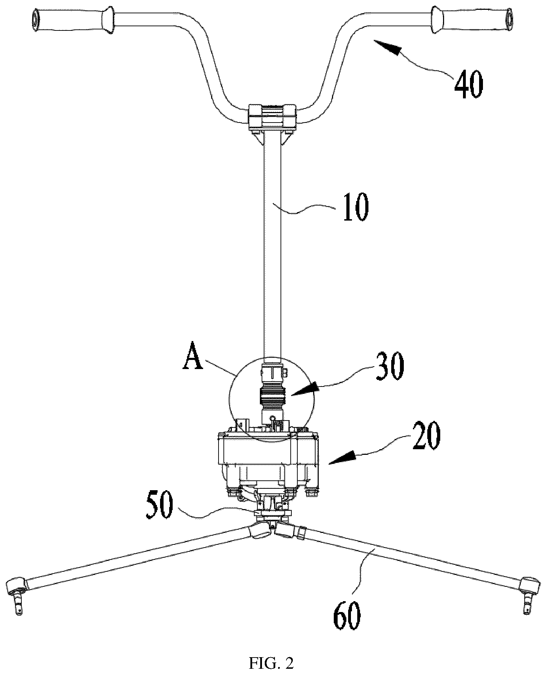

Specifically, referring to Figs. 1 and 2, the steering mechanism according to the present embodiment further includes a steering handle assembly 40, a steering rocker arm 50, and two steering links 60. The steering handle assembly 40 is coupled to the steering shaft 10. The steering rocker arm 50 has a first end rotatably coupled to the power steering system 20 and a second end rotatably coupled to the two steering links 60. The steering links 60 are coupled to wheels of the all-terrain vehicle to steer the wheels during driving.

The power steering system 20 according to the present embodiment is an electric power steering (EPS) system. The EPS system is a power steering system that relies directly on an electric motor to provide auxiliary torque directly. Compared with a hydraulic power steering (HPS) system, the EPS system can eliminate the need for power steering oil pumps, hoses, hydraulic oil, conveyor belts and engine-mounted pulleys that are necessary for the HPS system, thereby saving energy and protecting the environment. In addition, the EPS system also has the advantages of simple adjustment, flexible assembly and capability of providing steering power under various conditions. It can be understood that the power steering system 20 may also be an HPS system in other embodiments.

In the adjusting mechanism 30 of the present embodiment, the first connecting shaft 31 and the second connecting shaft 32 are rotatably coupled by the ball joint 33. When an operator turns the steering handle assembly 40 in a process of driving the all-terrain vehicle, power transmission with a variable angle can be performed between the first connecting shaft 31 and the second connecting shaft 32. Thus, it is possible to avoid a situation where a steering wheel of the all-terrain vehicle becomes heavy or difficult to turn in a long-term frequent steering process, prevent abrasion of parts for fixing the steering shaft 10, greatly improve controllability of an operator during driving, and guarantee driving safety.

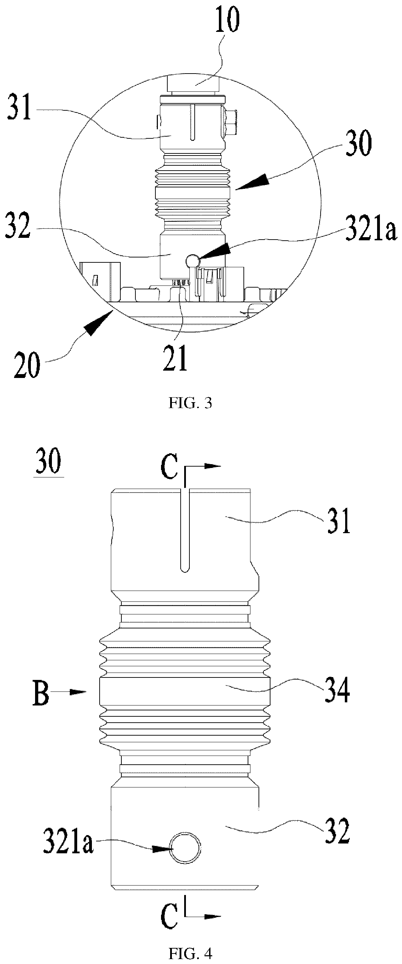

Referring to Figs. 4 to 6, the first connecting shaft 31 in the present embodiment includes a first body 311 and a first ball yoke 312 arranged at an end of the first body 311, and the first ball yoke 312 is has the first ball groove 312a. The second connecting shaft 32 includes a second body 321 and a second ball yoke 322 arranged at an end of the second body 321, and the second ball yoke 322 has the second ball groove 322a. The first ball yoke 312 and the second ball yoke 322 are staggered, such that a partial area of the first ball groove 312a overlaps with a partial area of the second ball groove 322a, and a partial structure of the ball joint 33 is located in an overlap area. The first connecting shaft 31 can drive the second connecting shaft 32 to twist in a twisting process, thus realizing the variable-angle power transmission.

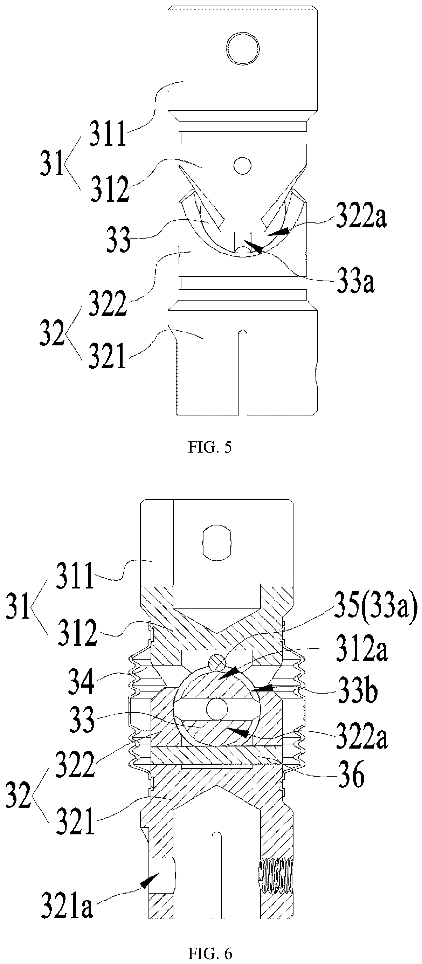

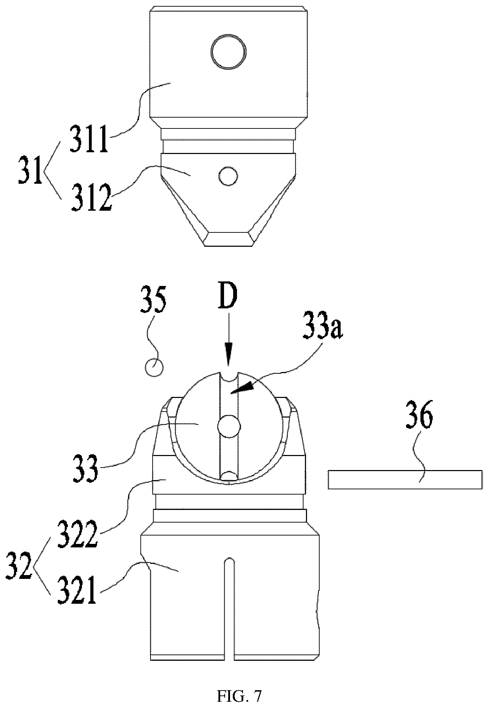

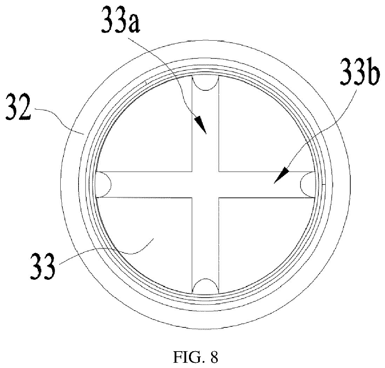

Further, referring to Figs. 7 and 8, along a great circle of the ball joint 33, the ball joint 33 in the present embodiment is provided with a first groove 33a cooperating with the first ball yoke 312 and a second groove 33b cooperating with the second ball yoke 322, and the first groove 33a and the second groove 33b are arranged in a crisscross pattern. For example, when a steering force is applied, two end portions of the first ball yoke 312 slide in the first groove 33a, and correspondingly, two end portions of the second ball yoke 322 slide in the second groove 33b, such that directional adjustment can be realized, and the variable-angle power transmission can be achieved. Referring to Figs. 6 and 7, the adjusting mechanism 30 further includes a first pin 35 and a second pin 36. The first pin 35 passes through the first ball groove 312a, a partial structure of the first pin 35 is located in the first groove 33a, and both ends of the first pin 35 are fixedly coupled to the first ball yoke 312. The second pin 36 passes through the second ball groove 322a, and a partial structure of the second pin 36 is located in the second groove 33b. That is, the first pin 35 and the second pin 36 limit the ball joint 33, thus preventing the ball joint 33 from moving, and also provide a bearing effect during rotation of the first connecting shaft 31 and the second connecting shaft 32. In other embodiments, the first pin 35 and the second pin 36 may be omitted.

In addition, referring to Figs. 4 and 6, the adjusting mechanism 30 in the present embodiment further includes a dust cover 34, and the dust cover 34 covers the ball joint 33, the first ball groove 312a and the second ball groove 322a, to block dust for the ball joint 33 and protect the ball joint 33.

Further, the power steering system 20 according to the present embodiment is splined to the second connecting shaft 32.

Specifically, referring to Fig. 3, the power steering system 20 according to the present embodiment includes a connecting rod 21 having an external spline (not shown), and the second connecting shaft 32 is provided with a shaft hole (not shown) having an internal spline. The second connecting shaft 32 is fitted over the connecting rod 21, and the external spline is fitted with the internal spline. The splines have a high load-bearing capacity and good centering property, thus improving the reliability of connection between the power steering system 20 and the second connecting shaft 32. In other embodiments, the connecting rod 21 may be provided with an internal spline, the second connecting shaft 32 may be provided with an external spline, and the connecting rod 21 may be fitted over the second connecting shaft 32.

With continued reference to Figs. 3, 4 and 6, in the present embodiment, the connecting rod 21 has a side wall provided with a first through hole (not shown), and the second connecting shaft 32 has a side wall provided with a second through hole 321a. In a fitted-over state, the first through hole is in communication with the second through hole 321a, and a fastener passes through the first through hole and the second through hole 321a to fasten the second connecting shaft 32 to the connecting rod 21. That is, the connecting rod 21 and the second connecting shaft 32 in the present embodiment are fixed by using a spline connection in conjunction with a fastening connection, thus improving the reliability of the connection between the power steering system 20 and the second connecting shaft 32. In other embodiments, the power steering system 20 and the second connecting shaft 32 may be coupled by the fastening connection alone, without the spline connection.

Similarly, the first connecting shaft 31 and the steering shaft 10 may be fixed by using one of the spline connection and the fastening connection, or by using the spline connection in conjunction with the fastening connection.

Another embodiment of the present disclosure further provides an all-terrain vehicle of a straddle type. The all-terrain vehicle includes a frame and the steering mechanism according to the above embodiment, and the power steering system 20 is fixed to the frame.

## Claims

1. A steering mechanism of an all-terrain vehicle, comprising:
a steering shaft (10);
a power steering system (20); and
an adjusting mechanism (30) comprising a ball joint (33), a first connecting shaft (31) and a second connecting shaft (32),
wherein the first connecting shaft (31) has a first end provided with a first ball groove (312a), the second connecting shaft (32) has a first end provided with a second ball groove (322a), and each of the first ball groove (312a) and the second ball groove (322a) is configured to accommodate a partial structure of the ball joint (33), to allow the first connecting shaft (31) and the second connecting shaft (32) to be rotatably coupled by the ball joint (33);
a second end of the first connecting shaft (31) away from the first ball groove (312a) is coupled to the steering shaft (10), and a second end of the second connecting shaft (32) away from the second ball groove (322a) is coupled to the power steering system (20),
wherein the first connecting shaft (31) comprises a first body (311) and a first ball yoke (312) arranged at an end of the first body (311), and the first ball yoke (312) has the first ball groove (312a); and the second connecting shaft (32) comprises a second body (321) and a second ball yoke (322) arranged at an end of the second body (321), and the second ball yoke (322) has the second ball groove (322a); and
the first ball yoke (312) and the second ball yoke (322) are staggered to enable a partial area of the first ball groove (312a) to overlap with a partial area of the second ball groove (322a), and the partial structure of the ball joint (33) is located in an overlap area,
**characterized in that** the ball joint (33) is provided with a first groove (33a) cooperating with the first ball yoke (312) and a second groove (33b) cooperating with the second ball yoke (322), along a great circle of the ball joint (33), and the first groove (33a) and the second groove (33b) are arranged in a crisscross pattern; and
the adjusting mechanism (30) further comprises:
a first pin (35) passing through the first ball groove (312a), a partial structure of the first pin (35) being located in the first groove (33a), and both ends of the first pin (35) being fixedly coupled to the first ball yoke (312); and
a second pin (36) passing through the second ball groove (322a), a partial structure of the second pin (36) being located in the second groove (33b), and both ends of the second pin (36) being fixedly coupled to the second ball yoke (322).

2. The steering mechanism according to claim 1, wherein two end portions of the first ball yoke (312) are configured to slide in the first groove (33a), and two end portions of the second ball yoke (322) are configured to slide in the second groove (33b).

3. The steering mechanism according to any one of claims 1 to 2, wherein the adjusting mechanism (30) further comprises a dust cover (34) covering the ball joint (33), the first ball groove (312a) and the second ball groove (322a).

4. The steering mechanism according to any one of claims 1 to 3, wherein the power steering system (20) is splined to the second connecting shaft (32).

5. The steering mechanism according to claim 4, wherein the power steering system (20) comprises a connecting rod (21) having an external spline, the second connecting shaft (32) is provided with a shaft hole having an internal spline, and the internal spline is arranged on an inner wall of the shaft hole; and
the second connecting shaft (32) is fitted over the connecting rod (21), and the external spline is fitted with the internal spline.

6. The steering mechanism according to claim 4, wherein the power steering system (20) comprises a connecting rod (21) having an internal spline, the second connecting shaft (32) is provided with an external spline, and the connecting rod (21) is fitted over the second connecting shaft (32).

7. The steering mechanism according to claim 5, wherein the connecting rod (21) has a side wall provided with a first through hole, and the second connecting shaft (32) has a side wall provided with a second through hole (321a); in a fitted-over state, the first through hole is in communication with the second through hole (321a), and a fastener passes through the first through hole and the second through hole (321a) to fasten the second connecting shaft (32) to the connecting rod (21).

8. The steering mechanism according to any one of claims 1 to 7, wherein the power steering system (20) is fastened to the second connecting shaft (32).

9. The steering mechanism according to any one of claims 1 to 8, wherein the first connecting shaft (31) is splined and/or fastened to the steering shaft (10).

10. The steering mechanism according to any one of claims 1 to 9, wherein the steering mechanism further comprises a steering rocker arm (50) and two steering links (60); and
the steering rocker arm (50) has a first end rotatably coupled to the power steering system (20) and a second end rotatably coupled to the two steering links (60).

11. The steering mechanism according to any one of claims 1 to 10, further comprising a steering handle assembly (40) coupled to the steering shaft (10).

12. The steering mechanism according to any one of claims 1 to 11, wherein the power steering system (20) is an electric power steering system (20).

13. An all-terrain vehicle of a straddle type, comprising a frame and the steering mechanism according to any one of claims 1 to 11, the power steering system (20) being fixed to the frame.

## Patentansprüche

1. Ein Lenkmechanismus eines Geländefahrzeugs, der folgende Merkmale aufweist:
eine Lenkwelle (10);
ein Servolenksystem (20); und
einen Einstellmechanismus (30) mit einem Kugelgelenk (33), einer ersten Verbindungswelle (31) und einer zweiten Verbindungswelle (32),
wobei die erste Verbindungswelle (31) ein erstes Ende aufweist, das mit einer ersten Kugelrille (312a) versehen ist, die zweite Verbindungswelle (32) ein erstes Ende aufweist, das mit einer zweiten Kugelrille (322a) versehen ist, und jede der ersten Kugelrille (312a) und der zweiten Kugelrille (322a) dazu ausgebildet ist, eine Teilstruktur des Kugelgelenks (33) unterzubringen, um zu ermöglichen, dass die erste Verbindungswelle (31) und die zweite Verbindungswelle (32) drehbar durch das Kugelgelenk (33) gekoppelt sind;
ein zweites Ende der ersten Verbindungswelle (31) entfernt von der ersten Kugelrille (312a) mit der Lenkwelle (10) gekoppelt ist und ein zweites Ende der zweiten Verbindungswelle (32) entfernt von der zweiten Kugelrille (322a) mit dem Servolenksystem (20) gekoppelt ist,
wobei die erste Verbindungswelle (31) einen ersten Körper (311) und ein erstes Kugeljoch (312) aufweist, das an einem Ende des ersten Körpers (311) angeordnet ist, und das erste Kugeljoch (312) die erste Kugelrille (312a) aufweist; und die zweite Verbindungswelle (32) einen zweiten Körper (321) und ein zweites Kugeljoch (322) aufweist, das an einem Ende des zweiten Körpers (321) angeordnet ist, und das zweite Kugeljoch (322) die zweite Kugelrille (322a) aufweist; und
das erste Kugeljoch (312) und das zweite Kugeljoch (322) versetzt sind, um zu ermöglichen, dass ein Teilbereich der ersten Kugelrille (312a) einen Teilbereich der zweiten Kugelrille (322a) überlappt, und sich die Teilstruktur des Kugelgelenks (33) in einem Überlappungsbereich befindet,
**dadurch gekennzeichnet, dass** das Kugelgelenk (33) mit einer ersten Rille (33a), die mit dem ersten Kugeljoch (312) zusammenarbeitet, und einer zweiten Rille (33b), die mit dem zweiten Kugeljoch (322) zusammenarbeitet, entlang eines Großkreises des Kugelgelenks (33) versehen ist und die erste Rille (33a) und die zweite Rille (33b) in einem Kreuzmuster angeordnet sind; und
der Einstellmechanismus (30) ferner folgende Merkmale aufweist:
einen ersten Stift (35), der durch die erste Kugelrille (312a) verläuft, wobei sich eine Teilstruktur des ersten Stifts (35) in der ersten Rille (33a) befindet und beide Enden des ersten Stifts (35) fest mit dem ersten Kugeljoch (312) gekoppelt sind; und
einen zweiten Stift (36), der durch die zweite Kugelrille (322a) verläuft, wobei sich eine Teilstruktur des zweiten Stifts (36) in der zweiten Rille (33b) befindet und beide Enden des zweiten Stifts (36) fest mit dem zweiten Kugeljoch (322) gekoppelt sind.

2. Der Lenkmechanismus gemäß Anspruch 1, bei dem zwei Endabschnitte des ersten Kugeljochs (312) dazu ausgebildet sind, in der ersten Rille (33a) zu gleiten, und zwei Endabschnitte des zweiten Kugeljochs (322) dazu ausgebildet sind, in der zweiten Rille (33b) zu gleiten.

3. Der Lenkmechanismus gemäß einem der Ansprüche 1 bis 2, bei dem der Einstellmechanismus (30) ferner eine Staubabdeckung (34) aufweist, die das Kugelgelenk (33), die erste Kugelrille (312a) und die zweite Kugelrille (322a) bedeckt.

4. Der Lenkmechanismus gemäß einem der Ansprüche 1 bis 3, bei dem das Servolenksystem (20) mit der zweiten Verbindungswelle (32) verzahnt ist.

5. Der Lenkmechanismus gemäß Anspruch 4, bei dem das Servolenksystem (20) eine Verbindungsstange (21) mit einer Außenverzahnung aufweist, wobei die zweite Verbindungswelle (32) mit einem Wellenloch mit einer Innenverzahnung versehen ist und die Innenverzahnung an einer Innenwand des Wellenlochs angeordnet ist; und die zweite Verbindungswelle (32) über die Verbindungsstange (21) gepasst ist und die Außenverzahnung an die Innenverzahnung gepasst ist.

6. Der Lenkmechanismus gemäß Anspruch 4, bei dem das Servolenksystem (20) eine Verbindungsstange (21) mit einer Innenverzahnung aufweist, die zweite Verbindungswelle (32) mit einer Außenverzahnung versehen ist und die Verbindungsstange (21) über die zweite Verbindungswelle (32) gepasst ist.

7. Der Lenkmechanismus gemäß Anspruch 5, bei dem die Verbindungsstange (21) eine Seitenwand aufweist, die mit einem ersten Durchgangsloch versehen ist, und die zweite Verbindungswelle (32) eine Seitenwand aufweist, die mit einem zweiten Durchgangsloch (321a) versehen ist; in einem übereinander gepassten Zustand das erste Durchgangsloch in Kommunikation mit dem zweiten Durchgangsloch (321a) steht und ein Befestigungselement durch das erste Durchgangsloch und das zweite Durchgangsloch (321a) verläuft, um die zweite Verbindungswelle (32) an der Verbindungsstange (21) zu befestigen.

8. Der Lenkmechanismus gemäß einem der Ansprüche 1 bis 7, bei dem das Servolenksystem (20) an der zweiten Verbindungswelle (32) befestigt ist.

9. Der Lenkmechanismus gemäß einem der Ansprüche 1 bis 8, bei dem die erste Verbindungswelle (31) mit der Lenkwelle (10) verzahnt und/oder an dieser befestigt ist.

10. Der Lenkmechanismus gemäß einem der Ansprüche 1 bis 9, wobei der Lenkmechanismus ferner einen Lenkschwinghebel (50) und zwei Spurstangen (60) aufweist; und
der Lenkschwinghebel (50) ein erstes Ende, das drehbar mit dem Servolenksystem (20) gekoppelt ist, und ein zweites Ende aufweist, das drehbar mit den beiden Spurstangen (60) gekoppelt ist.

11. Der Lenkmechanismus gemäß einem der Ansprüche 1 bis 10, der ferner eine Lenkgriffanordnung (40) aufweist, die mit der Lenkwelle (10) gekoppelt ist.

12. Der Lenkmechanismus gemäß einem der Ansprüche 1 bis 11, bei dem das Servolenksystem (20) ein elektrisches Servolenksystem (20) ist.

13. Ein Geländefahrzeug vom Spreiztyp, das einen Rahmen und den Lenkmechanismus gemäß einem der Ansprüche 1 bis 11 aufweist, wobei das Servolenksystem (20) an dem Rahmen fixiert ist.

## Revendications

1. Mécanisme de direction d'un véhicule tout-terrain, comprenant:
un arbre de direction (10);
un système de direction assistée (20); et
un mécanisme de réglage (30) comprenant une articulation à rotule (33), un premier arbre de connexion (31) et un deuxième arbre de connexion (32),
dans lequel le premier arbre de connexion (31) présente une première extrémité pourvue d'une première rainure à rotule (312a), le deuxième arbre de connexion (32) présente une première extrémité pourvue d'une deuxième rainure à rotule (322a), et chacune de la première rainure à rotule (312a) et de la deuxième rainure à rotule (322a) est configurée pour loger une structure partielle de l'articulation à rotule (33) pour permettre que le premier arbre de connexion (31) et le deuxième arbre de connexion (32) soient couplés de manière rotative par l'articulation à rotule (33);
une deuxième extrémité du premier arbre de connexion (31) éloignée de la première rainure à rotule (312a) est couplée à l'arbre de direction (10), et une deuxième extrémité du deuxième arbre de connexion (32) éloignée de la deuxième rainure à rotule (322a) est couplée au système de direction assistée (20),
dans lequel le premier arbre de connexion (31) comprend un premier corps (311) et une première arcade à rotule (312) disposée à une extrémité du premier corps (311), et la première arcade à rotule (312) présente la première rainure à rotule (312a); et le deuxième arbre de connexion (32) comprend un deuxième corps (321) et une deuxième arcade à rotule (322) disposée à une extrémité du deuxième corps (321), et la deuxième arcade à rotule (322) présente la deuxième rainure à rotule (322a); et
la première arcade à rotule (312) et la deuxième arcade à rotule (322) sont décalées pour permettre qu'une zone partielle de la première rainure à rotule (312a) vienne en chevauchement avec une zone partielle de la deuxième rainure à rotule (322a), et la structure partielle de l'articulation à rotule (33) est située dans une zone de chevauchement,
**caractérisé par le fait que** l'articulation à rotule (33) est pourvue d'une première rainure (33a) coopérant avec la première arcade à rotule (312) et d'une deuxième rainure (33b) coopérant avec la deuxième arcade à rotule (322), le long d'un grand cercle de l'articulation à rotule (33), et la première rainure (33a) et la deuxième rainure (33b) sont disposées selon un modèle entrecroisé; et
le mécanisme de réglage (30) comprend par ailleurs:
une première goupille (35) passant à travers la première rainure à rotule (312a), une structure partielle de la première goupille (35) étant située dans la première rainure (33a), et les deux extrémités de la première goupille (35) étant couplées de manière fixe à la première arcade à rotule (312); et
une deuxième goupille (36) passant à travers la deuxième rainure à rotule (322a), une structure partielle de la deuxième goupille (36) étant située dans la deuxième rainure (33b), et les deux extrémités de la deuxième goupille (36) étant couplées de manière fixe à la deuxième arcade à rotule (322).

2. Mécanisme de direction selon la revendication 1, dans lequel deux parties d'extrémité de la première arcade à rotule (312) sont configurées pour coulisser dans la première rainure (33a), et deux parties d'extrémité de la deuxième arcade à rotule (322) sont configurées pour coulisser dans la deuxième rainure (33b).

3. Mécanisme de direction selon l'une quelconque des revendications 1 à 2, dans lequel le mécanisme de réglage (30) comprend par ailleurs un couvercle pare-poussière (34) recouvrant l'articulation à rotule (33), la première rainure à rotule (312a) et la deuxième rainure à rotule (322a).

4. Mécanisme de direction selon l'une quelconque des revendications 1 à 3, dans lequel le système de direction assistée (20) est cannelé au deuxième arbre de connexion (32).

5. Mécanisme de direction selon la revendication 4, dans lequel le système de direction assistée (20) comprend une tige de connexion (21) présentant une cannelure externe, le deuxième arbre de connexion (32) est pourvu d'un trou d'arbre présentant une cannelure interne, et la cannelure interne est disposée sur une paroi intérieure du trou d'arbre; et
le deuxième arbre de connexion (32) est monté sur la tige de connexion (21), et la cannelure externe est montée avec la cannelure interne.

6. Mécanisme de direction selon la revendication 4, dans lequel le système de direction assistée (20) comprend une tige de connexion (21) présentant une cannelure interne, le deuxième arbre de connexion (32) est pourvu d'une cannelure externe, et la tige de connexion (21) est montée sur le deuxième arbre de connexion (32).

7. Mécanisme de direction selon la revendication 5, dans lequel la tige de connexion (21) présente une paroi latérale munie d'un premier trou traversant, et le deuxième arbre de connexion (32) présente une paroi latérale pourvue d'un deuxième trou traversant (321a); dans un état monté, le premier trou traversant est en communication avec le deuxième trou traversant (321a), et un élément de fixation passe à travers le premier trou traversant et le deuxième trou traversant (321a) pour fixer le deuxième arbre de connexion (32) à la tige de connexion (21).

8. Mécanisme de direction selon l'une quelconque des revendications 1 à 7, dans lequel le système de direction assistée (20) est fixé au deuxième arbre de connexion (32).

9. Mécanisme de direction selon l'une quelconque des revendications 1 à 8, dans lequel le premier arbre de connexion (31) est cannelé et/ou fixé à l'arbre de direction (10).

10. Mécanisme de direction selon l'une quelconque des revendications 1 à 9, dans lequel le mécanisme de direction comprend par ailleurs un culbuteur de direction (50) et deux liens de direction (60); et
le culbuteur de direction (50) présente une première extrémité couplée de manière rotative au système de direction assistée (20) et une deuxième extrémité couplée de manière rotative aux deux liens de direction (60).

11. Mécanisme de direction selon l'une quelconque des revendications 1 à 10, comprenant par ailleurs un ensemble de poignée de direction (40) couplé à l'arbre de direction (10).

12. Mécanisme de direction selon l'une quelconque des revendications 1 à 11, dans lequel le système de direction assistée (20) est un système de direction assistée électrique (20).

13. Véhicule tout terrain de type à selle, comprenant un châssis et le mécanisme de direction selon l'une quelconque des revendications 1 à 11, le système de direction assistée (20) étant fixé au châssis.
